# FASCICULE DE BREVET EUROPEEN

(11) **EP 2 441 629 B1**
(45) Date de publication et mention de la délivrance du brevet: **17.07.2013**
(21) Numéro de dépôt: 11185524.3
(22) Date de dépôt: 17.10.2011
(51) Int. Cl.: B60S 5/06, B60K 1/04, B66F 9/075, B60L 11/18

(54) **Véhicule automobile présentant des moyens de remplacement automatique d'une batterie d'accumulateurs, et procédé de substitution de batteries correspondant**
Kraftfahrzeug mit automatischer Batteriewechselvorrichtung und entsprechendes Verfahren zum Batteriewechsel
Motor vehicle comprising means to automatically replace a battery and corresponding method of replacing batteries

(30) Priorité: 18.10.2010 FR 1058490
(43) Date de publication de la demande: 18.04.2012
(73) Titulaire: BA Systèmes, 35310 Mordelles (FR)
(72) Inventeur: Thome, Jean-Luc, 35760 Saint-Grégoire (FR); Le Roy, Jean-Yves, 35580 Guichen (FR); Moulin, Romain, 75015 Paris (FR)
(74) Mandataire: Ermeneux, Bertrand

(56) Documents cités:
- EP-A1- 1 925 512
- EP-A1- 2 196 430
- DE-A1-102007 049 391
- GB-A- 2 455 200
- US-A1- 2004 173 408

## Description

### 1. Domaine de l'invention

Le domaine de l'invention est celui des véhicules automobiles.

Plus précisément, l'invention concerne un véhicule automobile présentant au moins un accumulateur électrique ou électrochimique destiné à alimenter en courant électrique un dispositif électrique embarqué, tel que notamment un moteur électrique.

L'invention s'applique aux véhicules automobiles avec ou sans conducteur. Un domaine connexe de l'invention est ainsi celui de la logistique industrielle.

### 2. Etat de la technique

Il est bien connu de procéder à une recharge d'une batterie d'accumulateurs d'un véhicule automobile, lorsque sa charge atteint une valeur minimale.

On connait ainsi des techniques de rechargement d'une batterie d'accumulateurs consistant à raccorder un véhicule sur une prise de courant pendant une durée suffisante pour recharger sa batterie, par exemple dans une station de charges.

Un inconvénient de ces techniques de charge d'une batterie est que le véhicule est immobilisé pendant toute la période de charge, qui peut atteindre plusieurs heures, notamment dans un environnement froid. Cet inconvénient est très pénalisant si le véhicule est utilisé dans un contexte industriel.

Afin de réduire la durée de charge d'une batterie, on a proposé de la soumettre à des différences de potentiels élevées.

Un inconvénient de cette technique est qu'elle réduit significativement la durée de vie d'une batterie.

On a également pensé à monter une batterie de façon amovible sur le véhicule, afin de procéder, lorsqu'elle est déchargée, à son remplacement par une batterie de substitution chargée.

Selon une technique connue, c'est un opérateur qui assure le remplacement de la batterie d'accumulateurs.

On connait du document US-A1-2004/173408 un véhicule selon le préambule de la revendication 1, équipé de sorte à faciliter le remplacement de la batterie par un opérateur.

Un inconvénient de cette technique connue est que les opérations de remplacement d'une batterie sont malaisées et parfois complexes, compte-tenu de la masse importante d'une batterie, qui atteint généralement plusieurs dizaines, ou centaines de kilogrammes, et/ou du fait d'un manque d'accessibilité.

Un autre inconvénient de cette technique connue est bien évidemment qu'il faut mobiliser un opérateur pour assurer le remplacement des batteries, ce qui est coûteux.

On a par ailleurs constaté qu'un opérateur effectuant des interventions répétées pour remplacer des batteries a un fort risque de présenter une pathologie répertoriée parmi les troubles musculo-squelettiques.

Afin de remédier à cet inconvénient, une solution technique connue consiste à équiper une station de charges d'un automate conçu pour assurer une manipulation des batteries d'accumulateurs.

Cette technique présente l'inconvénient de devoir implanter au sol des équipements de charges encombrants.

Un autre inconvénient de cette technique est qu'elle est onéreuse, notamment dans le cas où on prévoit de charger un nombre restreint de batteries de véhicules par semaine.

Encore un inconvénient de cette technique est que le fonctionnement de l'ensemble des véhicules dépendant de la station de charges pour le remplacement de leur batterie est affecté en cas de panne ou de dysfonctionnement prolongé de l'automate.

### 3. Objectifs de l'invention

L'invention a donc notamment pour objectif de pallier les inconvénients de l'état de la technique cités ci-dessus.

Plus précisément l'invention a pour objectif de fournir une technique de véhicule automobile autonome, qui ne nécessite pas une intervention humaine pour remplacer un accumulateur électrique ou électrochimique déchargé monté sur le véhicule.

Un objectif de l'invention est également de fournir une telle technique de véhicule automobile qui assure un remplacement rapide de l'accumulateur, de sorte à ne pas immobiliser le véhicule plus de quelques dizaines de secondes.

Un autre objectif de l'invention est de fournir une telle technique qui soit simple à mettre en oeuvre.

L'invention a également pour objectif de fournir une telle technique qui soit peu encombrante au sol.

Un objectif de l'invention est également de proposer une telle technique qui soit d'un coût de revient réduit.

Encore un objectif de l'invention est de fournir une telle technique qui soit fiable, notamment lors d'une exposition à des températures basses.

### 4. Exposé de l'invention

Ces objectifs, ainsi que d'autres qui apparaitront par la suite sont atteints à l'aide d'un véhicule automobile, notamment du type autoguidé, comprenant au moins un dispositif électrique, tel qu'un moteur électrique, et une unité d'alimentation dudit dispositif en courant électrique comprenant au moins un accumulateur électrique ou électrochimique, montée dans un logement dudit véhicule présentant des moyens de connexion électrique de ladite unité d'alimentation avec ledit dispositif électrique.

L'invention concerne ainsi par exemple des véhicules automobiles à moteur électrique pour le transport de personnes ou la manutention, avec conducteur porté ou accompagnant ou encore sans conducteur. Il peut également s'agir d'un véhicule hybride.

Dans le cadre de l'invention, le terme dispositif électrique peut se rapporter à un moteur électrique participant ou non à la locomotion du véhicule, mais également à tout autre équipement électrique connu d'un véhicule automobile. Un tel dispositif électrique peut par exemple être un moteur électrique assurant l'élévation ou à la translation d'un fourche d'un chariot gerbeur.

L'unité d'alimentation en courant électrique d'un véhicule selon l'invention peut notamment être une batterie d'accumulateurs. Elle peut également comprendre des condensateurs.

Selon l'invention un tel véhicule automobile comprend des moyens de substitution de ladite unité d'alimentation par une unité d'alimentation de remplacement sensiblement identique à ladite unité d'alimentation au sein dudit logement, configurés de sorte à permettre l'extraction de ladite unité hors dudit logement et le montage de ladite unité de remplacement dans ledit logement.

Ainsi, de façon inédite, l'invention propose d'équiper le véhicule de moyens de substitution autonomes pour remplacer de façon automatique une unité d'alimentation en courant électrique déchargée par une unité d'alimentation chargée.

On obtient donc avantageusement un véhicule pouvant en permanence circuler et fonctionner convenablement, indépendamment de la mise à disposition d'un opérateur et/ou de la mise en place de moyens structurels complexes au sol.

Notamment, il n'est pas nécessaire d'équiper le poste de charges des unités d'alimentation d'un actionneur.

Lesdits moyens de substitution comprennent des moyens d'entraînement en coulissement d'un élément de solidarisation à ladite unité d'alimentation entre une position escamotée dans laquelle ladite unité d'alimentation est montée dans ledit logement et au moins une position de dégagement, dans laquelle ladite unité d'alimentation est au moins partiellement extraite dudit logement.

On dispose ainsi d'une solution d'entraînement réversible et particulièrement simple, qui permet de tirer ou de pousser l'unité d'alimentation dans la direction de coulissement de l'élément de solidarisation, afin d'extraire cette unité d'alimentation de son logement, ou inversement, de l'introduire dans son logement.

Selon un aspect particulier de l'invention, un tel véhicule comprend des moyens de verrouillage de ladite unité d'alimentation dans ladite position escamotée.

On prévient ainsi un risque de déconnexion et/ou de chute de l'unité d'alimentation, lors du déplacement du véhicule.

Ledit élément de solidarisation est porté par une portion d'une bande, et lesdits moyens d'entraînement en coulissement comprennent deux poulies mobiles entre lesquelles ladite bande est montée tendue.

L'élément de solidarisation peut ainsi être entraîné dans un sens ou dans le sens inverse, en inversant simplement le sens de rotation des poulies.

Dans le cadre de l'invention, la bande portant l'élément de solidarisation peut par exemple être formée par une chaine ou par une courroie, ou par un assemblage de portions de bande différentes.

Dans un autre mode de réalisation particulier de l'invention, il peut être envisagé de monter ledit élément de solidarisation sensiblement à l'extrémité d'un bras télescopique.

Lesdites poulies sont montées sur un support mobile par rapport audit logement.

Ainsi, l'élément de solidarisation peut accompagner l'unité d'alimentation hors du logement et l'extraire complètement du logement.

Un tel support mobile peut notamment être d'une longueur inférieur au logement pour pouvoir se loger aisément dans ce dernier dans la position escamotée.

Selon un aspect particulier de l'invention, ledit support mobile est solidaire de la tige d'un vérin destiné à pousser et/ou tirer ledit support.

Le support mobile peut ainsi être déporté hors du logement en actionnant ce vérin.

Dans au moins un mode de réalisation particulier de l'invention, lesdits moyens d'entraînement en coulissement comprennent des moyens appartenant au groupe comprenant au moins :
- moyens d'entraînement motorisé d'une desdites poulies en rotation ;
- moyens de fixation des extrémités de ladite bande audit logement, de façon à permettre un mouflage de ladite bande.

Dans un mode de réalisation préférentiel de l'invention, un véhicule automobile tel que ceux décrits ci-dessus comprend des moyens de commande desdits moyens de substitution agencés pour activer lesdits moyens de substitution lorsque la charge dudit accumulateur atteint un seuil minimum prédéterminé.

On procède ainsi automatiquement au remplacement de l'unité d'alimentation avant qu'elle ne soit entièrement déchargée.

Selon un mode de réalisation particulièrement avantageux de l'invention, un véhicule automobile tel que ceux décrits précédemment comprend une unité d'alimentation auxiliaire alimentant lesdits moyens de substitution et/ou ledit dispositif électrique et/ou lesdits moyens de commande.

Une telle unité d'alimentation auxiliaire permet ainsi d'alimenter le dispositif électrique en courant électrique à la place de l'unité d'alimentation lors de son remplacement, et d'alimenter les moyens de substitution.

Dans le cas où le dispositif électrique est un moteur électrique participant à la locomotion du véhicule, l'alimentation auxiliaire permet notamment de déplacer le véhicule.

Dans un autre mode de réalisation avantageux de l'invention, un véhicule automobile tel que ceux décrits précédemment comprend des moyens de connexion électrique reliés auxdits moyens de substitution et/ou auxdits moyens de commande, et/ou audit dispositif électrique configurés de sorte à permettre un contact électrique avec un rail fixe.

C'est ainsi par l'intermédiaire du rail que le dispositif électrique et/ou les moyens de substitution peuvent être alimentés en courant électrique pendant le remplacement de l'unité d'alimentation. Le rail permet par ailleurs de guider le véhicule dans ses déplacements. Il peut s'agir par exemple d'un rail fixé au sol ou en hauteur, sur une structure porteuse.

Dans un mode de réalisation de l'invention, lesdits moyens de substitution comprennent des moyens d'émission d'un signal encapsulant une information de commande d'un moteur destiné à la locomotion de ladite unité d'alimentation ou de ladite unité d'alimentation de remplacement.

On commande ainsi à distance le déplacement d'unités d'alimentation à propulsion autonome.

Le signal de commande peut par exemple être émis par une cellule infrarouge, un émetteur radiofréquence, ....

L'invention concerne également une unité d'alimentation en courant électrique comprenant au moins un accumulateur électrique, agencée de sorte à pouvoir être montée dans un logement d'un véhicule automobile tel que décrit ci-dessus, dont les moyens de substitution comprennent des moyens d'entraînement en coulissement d'un élément de solidarisation à ladite unité d'alimentation entre une position escamotée dans laquelle ladite unité d'alimentation est montée dans ledit logement et au moins une position de dégagement, dans laquelle ladite unité d'alimentation est au moins partiellement extraite dudit logement de façon à être connectée à un dispositif électrique dudit véhicule.

Selon l'invention, une telle unité d'alimentation en courant électrique comprend des moyens de guidage dudit élément de solidarisation des moyens de substitution dudit véhicule à ladite unité.

Ainsi, grâce à ce guidage, on contrôle la trajectoire de l'élément de solidarisation lorsque le véhicule se déplace.

Selon un aspect particulier de l'invention, une telle unité d'alimentation présente une saillie formant poussoir sur une face portant au moins une borne de connexion électrique dudit accumulateur.

L'invention concerne également une unité d'alimentation en courant électrique comprenant au moins un accumulateur électrique et présentant des moyens de locomotion comprenant un moteur, agencée de sorte à pouvoir être montée dans un logement d'un véhicule tel que ceux décrits ci-dessus dont les moyens de substitution comprennent des moyens d'émission d'un signal encapsulant une information de commande dudit moteur destiné à la locomotion de ladite unité d'alimentation.

On obtient ainsi une unité à propulsion autonome.

L'invention concerne également un véhicule automobile tel que ceux décrits ci-dessus présentant une unité d'alimentation comprenant des moyens de guidage d'un élément de solidarisation des moyens de substitution dudit véhicule à ladite unité, et/ou comprenant une saillie formant poussoir sur une face portant au moins une borne de connexion électrique dudit accumulateur, et/ou comprenant des moyens de locomotion comprenant un moteur.

L'invention concerne encore un dispositif de chargement d'un accumulateur d'au moins une unité d'alimentation en courant électrique telle que décrite ci-dessus.

Selon l'invention, un tel dispositif de chargement comprend un bâti présentant au moins un logement de charge agencé pour recevoir ladite unité d'alimentation, ledit logement de charge étant disposé sensiblement à la même hauteur par rapport au sol qu'un logement d'un véhicule automobile tel que ceux décrits précédemment, destiné à recevoir ladite unité d'alimentation.

Ainsi on peut transférer simplement l'unité d'alimentation du logement du véhicule au logement de charge, ou vice versa, en faisant coulisser l'unité d'alimentation.

Il convient de noter que le dispositif de chargement selon l'invention présente une structure mécanique particulièrement simple. Il est fixe et ne comprend, de préférence, aucune partie mobile en translation.

Dans un mode de réalisation particulier de l'invention dans lequel ledit bâti comprend deux desdits logements de charge, un tel dispositif de chargement comprend :
- un connecteur formant levier associé à un premier desdits logements de charge, un premier bras dudit connecteur portant un patin de connexion électrique et un deuxième bras dudit connecteur s'étendant latéralement hors dudit logement ; et
- un générateur relié audit patin de connexion ;
   ledit premier connecteur formant levier étant monté pivotant sur ledit bâti de sorte à pouvoir prendre au moins deux positions :
- dans le cas où aucune unité d'alimentation n'est montée dans le second desdits logements de charge, une position de charge dans laquelle ledit premier bras s'étend sensiblement parallèlement à la face portant une borne de connexion électrique d'un accumulateur d'une desdites unités d'alimentation montée dans ledit logement de charge associé audit connecteur, de façon à permettre une solidarisation dudit patin avec ladite borne ;
- une position basculée, dans laquelle ledit deuxième bras est en butée contre une saillie formant poussoir d'une unité d'alimentation montée dans le second desdits logements de charge.

Ainsi, on peut utiliser un générateur de courant électrique unique, encore appelé chargeur, pour charger des unités d'alimentation s'insérant dans l'un ou l'autre des logements de charge, sans risquer de connecter à ce générateur deux unités d'alimentation en parallèle, dont l'une pourrait alors débiter dans l'autre et se décharger.

Dans au moins un mode de réalisation particulier de l'invention, un générateur de courant électrique distinct est adjoint à chacun desdits logements de charge.

L'invention concerne également un procédé de substitution d'une unité d'alimentation par une unité d'alimentation de remplacement au sein d'un logement d'un véhicule automobile tel que ceux décrits précédemment.

Selon l'invention un tel procédé comprend les étapes suivantes :
- extraction de ladite unité d'alimentation dudit logement ;
- dépose de ladite unité d'alimentation ;
- déplacement dudit véhicule de sorte à positionner ledit logement dudit véhicule en regard de ladite unité d'alimentation de remplacement ;
- montage de ladite unité d'alimentation de remplacement dans ledit logement.

Selon un aspect particulier de l'invention, lors de ladite étape de dépose, ladite unité d'alimentation est déposée dans un logement d'un dispositif de chargement tel que ceux décrits ci-dessus.

### 5. Liste des figures

D'autres caractéristiques et avantages de l'invention apparaitront plus clairement à la lecture de la description suivante de modes de réalisation particuliers de l'invention, donnés à titre de simples exemples illustratifs et non limitatifs, et des dessins annexés parmi lesquels :
- la figure 1 est une vue en perspective d'un chariot autoguidé selon l'invention ;
- la figure 2 est une vue de détail d'un dispositif de chargement d'accumulateur selon l'invention ;
- la figure 3 représente un connecteur du dispositif de chargement présenté en référence à la figure 2 ;
- la figure 4 est une vue de dessus du chariot présenté sur la figure 1 accolé au dispositif de chargement présenté en référence à la figure 2 afin d'y déposer une batterie ;
- la figure 5 représente le dispositif de substitution de batteries du chariot présenté en référence à la figure 1 ;
- la figure 6 est une représentation synoptique, sous forme de diagramme, des étapes d'un procédé de substitution de batterie selon l'invention ;
- la figure 7 illustre un autre exemple de mise en oeuvre d'un dispositif de substitution de batteries d'un véhicule automobile selon l'invention ;
- la figure 8 représente un autre exemple de dispositif de chargement présentant un rail d'alimentation en courant électrique pour permettre un déplacement d'un véhicule selon l'invention contre ce dispositif ;
- la figure 9 est vue schématique d'un autre exemple de batterie selon l'invention.

### 6. Description détaillée de l'invention

### 6.1. Rappel du principe de l'invention

Comme déjà indiqué, le principe de l'invention repose notamment sur la mise en oeuvre d'un véhicule automobile équipé de moyens autonomes permettant de substituer une unité d'alimentation en courant électrique comprenant un accumulateur par une unité d'alimentation de remplacement sans assistance humaine.

### 6.2. Exemple de mode de réalisation de l'invention

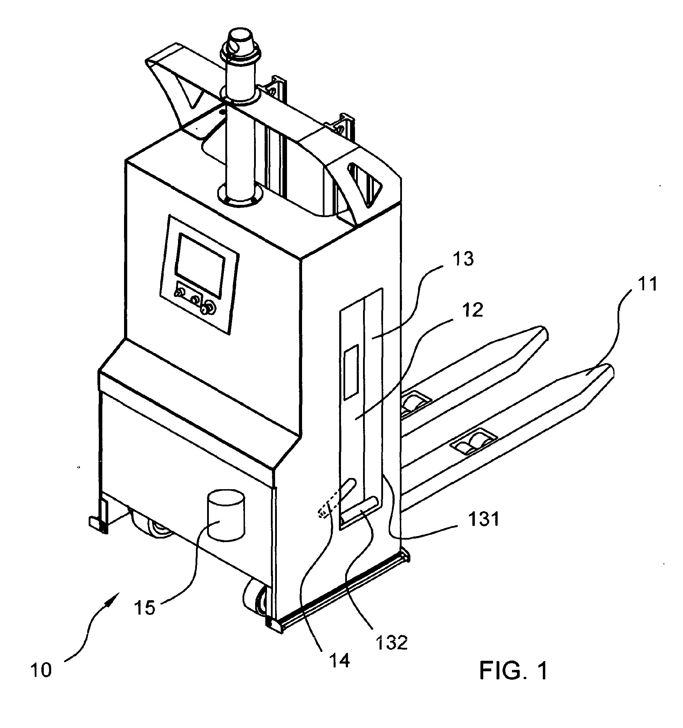

On a illustré sur la figure 1 un premier mode de réalisation d'un véhicule automobile selon l'invention dans une vue en perspective.

Sur la figure 1, le véhicule automobile 10 est un chariot autoguidé de type gerbeur multidirectionnel dont la largeur est adaptée à une circulation dans une allée délimitée par des rayonnages. Il présente une fourche élévatrice 11 permettant de déposer ou de collecter des palettes, des cartons ou des produits dans des rayonnages.

Le moteur électrique 15 assurant la locomotion du chariot 10 est alimenté en courant électrique par une batterie à accumulateurs 12 amovible 24V montée dans un logement 13 à l'intérieur du chariot 10.

Le logement 13 présente une ouverture 131 débouchant sur un côté du châssis du chariot 10, par laquelle la batterie 12 a été introduite dans le logement 13.

Dans ce mode de réalisation particulier de l'invention, la batterie 12 repose sur une table à rouleaux 132 destinée à faciliter le coulissement de la batterie 12 dans le logement 13.

Deux patins de connexion reliés au moteur 15 (non représentés sur la figure 1) sont fixés dans le logement 13. Chacun de ces patins est en contact avec une borne de la batterie 12 dans la position escamotée représentée sur la figure 1, où la batterie 12 est montée dans le logement 13.

Un levier basculant 14 actionné par un vérin assure un verrouillage de la batterie 12 montée dans le logement 13, en empêchant sa sortie.

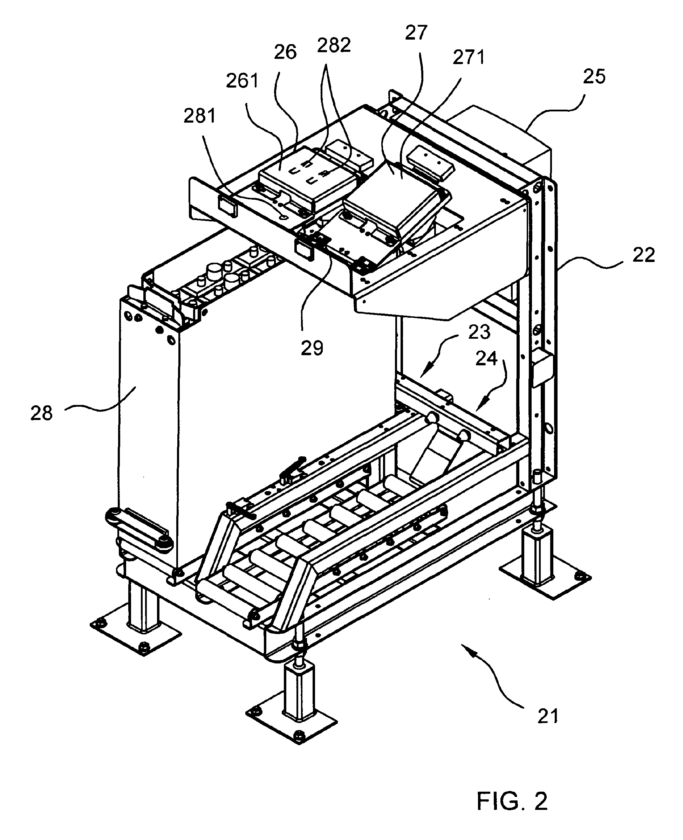

Lorsque le niveau de charge des accumulateurs de la batterie 12 atteint un seuil minimal prédéterminé, correspondant dans ce mode de réalisation particulier de l'invention à vingt pourcents de la capacité nominale de la batterie, le chariot 10 se dirige automatiquement vers un dispositif de chargement d'accumulateurs fixe 21 situé dans son environnement immédiat, représenté en perspective et de façon détaillée sur la figure 2. À cet effet, l'emplacement du dispositif de chargement a été stocké dans une mémoire du chariot 10 et/ou des moyens de repérage sont prévus au sol pour guider le chariot 10 jusqu'au dispositif 21.

Dans une variante de ce mode de réalisation particulier de l'invention, il peut être envisagé de diriger le chariot autoguidé vers un dispositif de chargement à intervalles réguliers, et par exemple toutes les huit heures.

Le dispositif de chargement 21, encore appelé base de chargement dans la suite de la description, comprend un bâti 22 fixé au sol présentant un premier 23 et un second 24 logement de charge disposés l'un à côté de l'autre, destinés chacun à recevoir une batterie.

Le fond de chacun des logements de charge 23, 24 est équipé d'une table à rouleau 26 pour faciliter le coulissement des batteries.

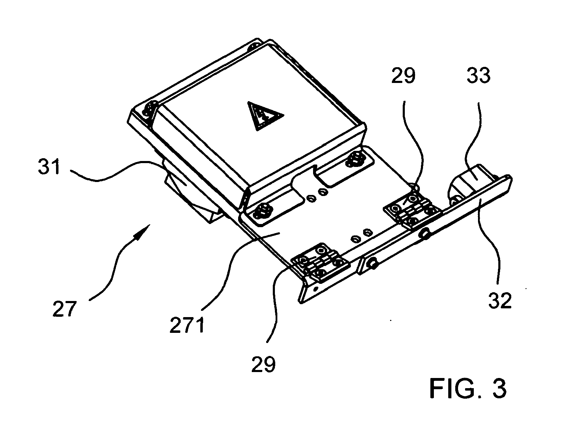

Un générateur de courant 25 est fixé à l'arrière du bâti 22. Ce chargeur 25 est relié aux paires de patins de connexion 31 (voir la figure 3) portées chacune par un socle constitué d'un premier bras 261, 271 des connecteurs formant levier 26, 27, associés respectivement aux logements de charge 23 et 24.

Les connecteurs 26 et 27 sont fixés au bâti par des charnières 29, de façon à pouvoir pivoter vers le haut.

Le connecteur 27 est représenté seul sur la figure 3. On constate qu'il présente un deuxième bras 32 s'étendant latéralement sur le côté droit du connecteur 27. Une butée 33 est fixée à l'extrémité du deuxième bras 32, débordant sur le côté du connecteur 27.

Un deuxième bras de forme sensiblement identique au bras 32 s'étend symétriquement sur le côté gauche du connecteur 26.

Comme on peut le voir sur la figure 2, une batterie 28 en fin de charge est montée dans le premier logement de charge 23. Le premier bras 261 du connecteur 26 s'étend sensiblement horizontalement et plaque la paire de patins 31 contre les bornes 282 de la batterie 28, représentées en traits pointillés.

Le connecteur 27 associé au second logement de charge 24, resté vide, 24 est maintenu dans une position basculée vers le haut sous la poussée d'une saillie 281 formée sur la face supérieure de la batterie 28 (représentée en traits pointillés sur la figure 2) s'appuyant sur la butée 33.

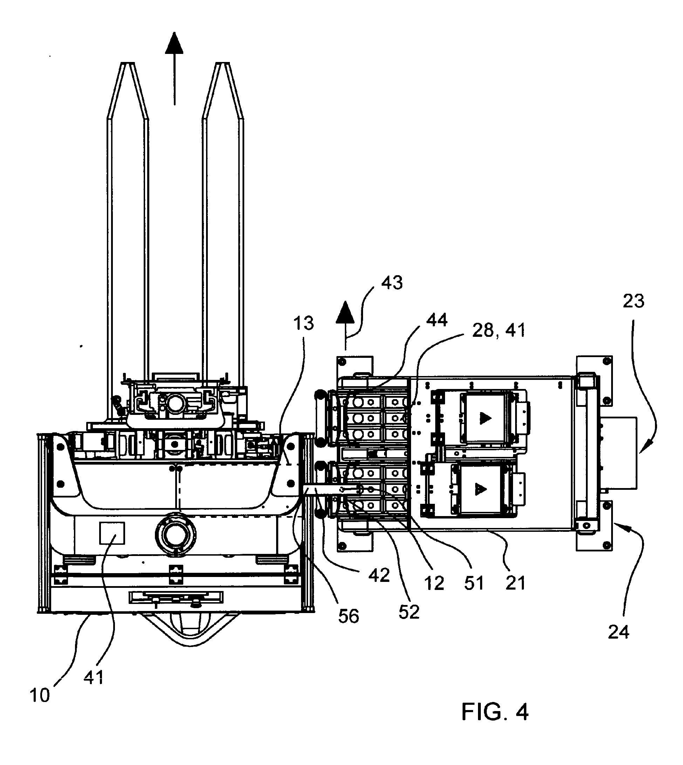

On a représenté sur la figure 4 le chariot 10 arrêté le long de la base de chargement 21, en vue de dessus. Le chariot 10 est accolé à la base 21 par son flanc droit de sorte à placer le logement 13 en face du logement de charge 24.

Les deux logements 13 et 24 sont avantageusement disposés sensiblement à une même distance par rapport au sol de façon à pouvoir faire coulisser la batterie 12 d'un logement à l'autre.

Dès l'arrêt du chariot, un système électronique de commande (non représenté sur la figure 4) transmet un signal de déverrouillage de la batterie permettant d'actionner le vérin solidaire du levier 14 pour basculer le levier vers le bas et libérer la batterie 12. Ce système de commande active ensuite un dispositif de substitution 42 de la batterie 12 par une batterie de remplacement chargée 41, qui procède dans une première étape à l'extraction de la batterie 12 hors du logement 13.

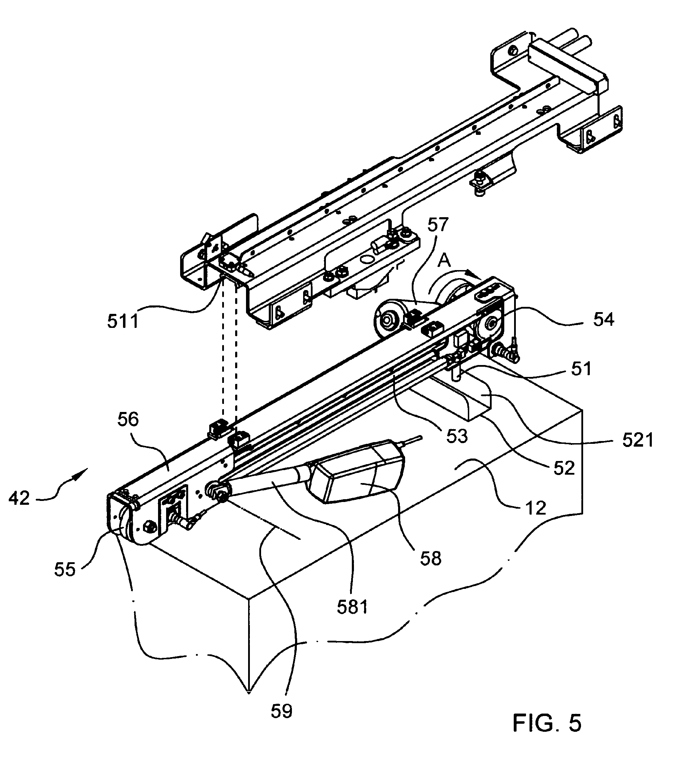

Le dispositif de substitution 42 monté dans le logement 13 est présenté de façon détaillée en référence à la figure 5, dans une vue éclatée. Ce dispositif 42 comprend un doigt 51 solidarisé à la batterie 12, qui pénètre dans une gorge débouchante 521 d'un "U" 52 fixé transversalement sur la face supérieure de la batterie 12.

Le doigt 51 est fixé à une portion d'une chaîne 53 formant une boucle fermée, tendue entre deux poulies mobiles 54 et 55 montées aux extrémités d'un support mobile 56 solidaire d'un vérin 58.

Le support est porté et guidé en translation par une glissière 511 fixée au logement 13.

Le corps du vérin 58 est fixé au logement 13. Un axe d'articulation 59 relie l'extrémité de la tige 581 au support mobile 56.

Dans la position escamotée, le support 56 est contenu dans le logement 13 et le doigt 51 est positionné à proximité de la poulie arrière 54.

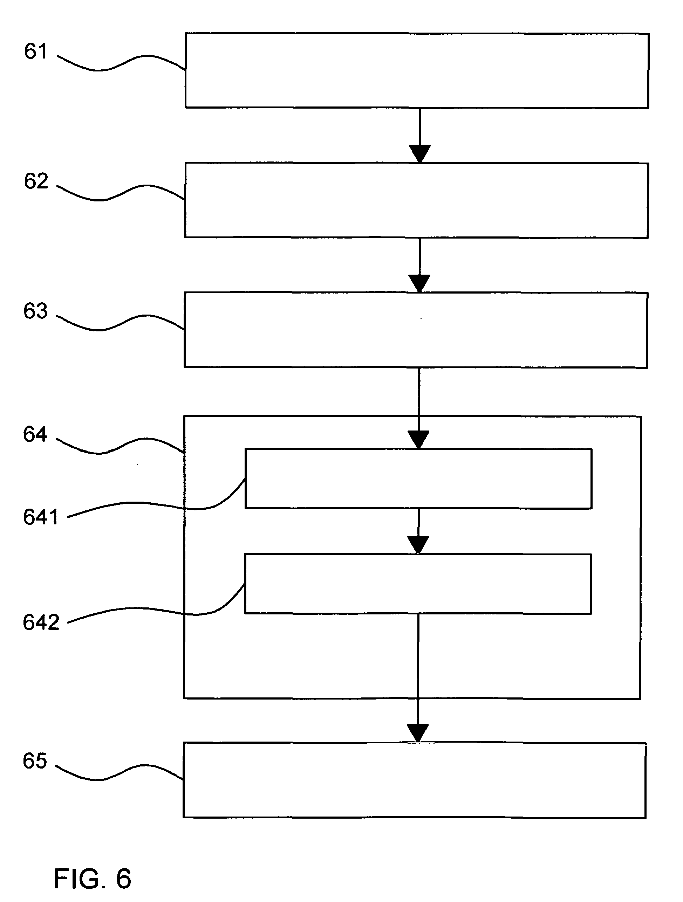

La figure 6 résume les étapes du procédé de substitution au sein du logement 13 de la batterie 12 par une batterie de remplacement 41, sous forme d'un diagramme synoptique.

Lors de l'étape d'extraction 61 de la batterie 12, un motoréducteur d'entraînement 57 actionne la rotation de la poulie 54 dans le sens illustré par la flèche A. Ceci a pour effet de faire coulisser le doigt 51 vers la poulie 55, et par conséquence de pousser la batterie 12 en direction de l'ouverture 13, jusqu'à une position de dégagement dans laquelle la batterie est partiellement extraite du logement 13.

Dans une deuxième étape 62, la tige 581 du vérin 58 pousse le support 56 pour sortir complètement la batterie du logement 13 et la déposer dans le logement de charge 24.

Dans une variante de ce mode de réalisation de l'invention, il peut être prévu de coordonner le coulissement du doigt 51 par rapport au support 56 avec celui du support 56.

Il convient de noter qu'une unité auxiliaire 41 est avantageusement prévue sur le chariot 10 pour alimenter le motoréducteur 57, le vérin 58 et le système électronique de commande en courant électrique, lorsque les bornes de la batterie 12 se déconnectent des patins fixés au logement 13.

L'unité auxiliaire 41 est également reliée au moteur électrique 15. Elle permet de translater le chariot 10 sur quelques centimètres lors d'une troisième étape 63, afin de placer le logement 13 en regard du logement de charge 23, dans lequel est inséré la batterie de remplacement 41.

Lors du déplacement du chariot 10, le doigt 51 est guidé dans la gorge 521 suivant la direction de la flèche 43, afin de s'assurer qu'il puisse pénétrer convenablement dans la gorge d'un "U" 44 fixé sur la batterie 28, disposé dans l'alignement de la gorge débouchante 521.

La batterie de remplacement 28 est montée dans une quatrième étape 64 dans le logement 13 en la tirant à l'aide du doigt 51. La tige du vérin est rétractée dans une première étape 641, de façon à rentrer le support mobile 56 dans le logement 13, puis dans une deuxième étape 642, le doigt 51 est replacé dans la position escamotée en inversant le sens de rotation de l'arbre du motoréducteur 57.

Dans une dernière étape 65, le levier basculant 14 est relevé de façon à verrouiller la batterie dans le logement 13.

### 6.3. Autres exemples de mode de réalisation de l'invention

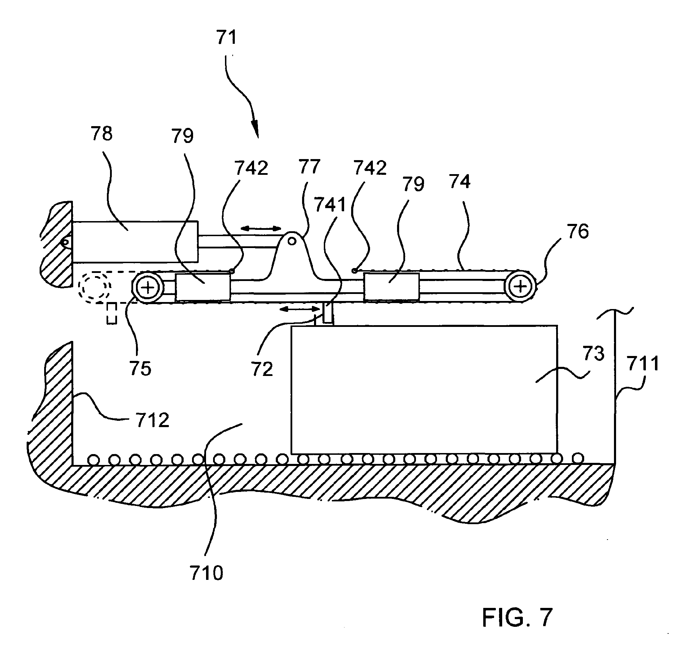

La figure 7 est une vue schématique d'une variante de mise en oeuvre 71 du dispositif de substitution d'une batterie d'accumulateurs 42 du chariot présenté ci-dessus de façon détaillée.

Sur la figure 7, le doigt de solidarisation 72 du dispositif 71 à la batterie 73 est porté par une portion 741 d'une chaîne 74 tendue entre deux poulies 75 et 76, dont les extrémités 742 sont fixées au logement 710 recevant la batterie 73.

Le support mobile 77 portant les poulies 75 et 76 est monté pivotant à l'extrémité de la tige d'un vérin 78, et est guidé par des glissières 79.

Lorsque la tige du vérin pousse ou tire le support 77, la chaîne 74 se déforme vers l'ouverture 711 du logement 710, respectivement vers le fond du logement 712, en opérant un mouflage. Le déplacement du doigt 72 est ainsi proportionnel à la course de la tige du vérin, et dans ce mode de réalisation de l'invention sensiblement double de celui du vérin.

On constate donc que le dispositif 71 permet de lier l'avance du doigt de solidarisation à celle de la tige du vérin, d'une façon particulièrement simple.

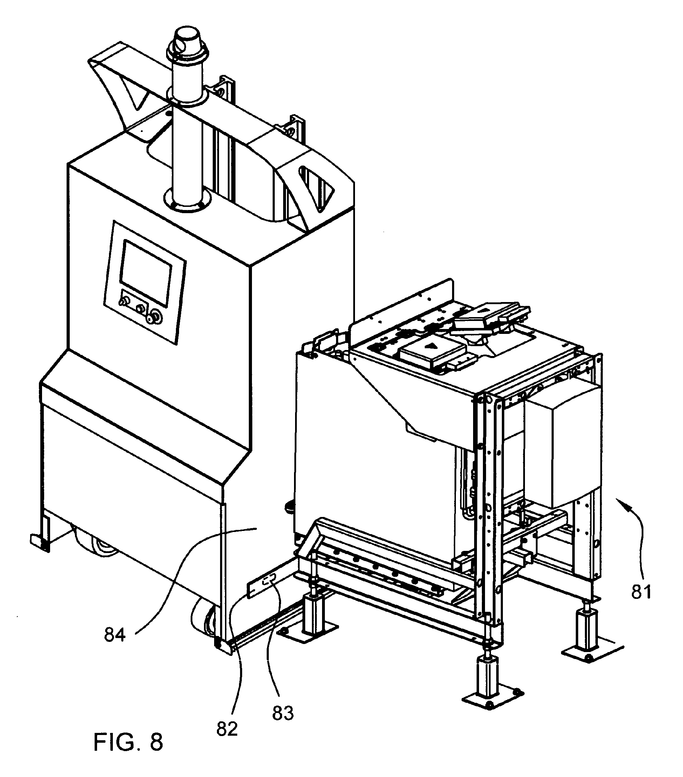

En référence à la figure 8, on présente un autre exemple de dispositif de chargement selon l'invention ne nécessitant pas d'équiper un véhicule électrique d'une unité d'alimentation auxiliaire pour procéder au remplacement de la batterie alimentant son moteur.

Dans le mode de réalisation de l'invention illustré sur la figure 8, le dispositif de chargement 81 présente un rail d'alimentation en courant électrique 82 fixé à mi-hauteur. Ce rail 82 permet à un véhicule électrique selon l'invention 84 équipé de patins de connexion électrique 83 agencés pour être en contact avec le rail 82 d'être alimenté en courant électrique et de se déplacer contre ce dispositif 81, lorsque la batterie d'accumulateurs destinée à assurer sa propulsion est extraite de son logement.

Dans des variantes de ce mode de réalisation de l'invention, il peut être envisagé de fixer le rail au sol.

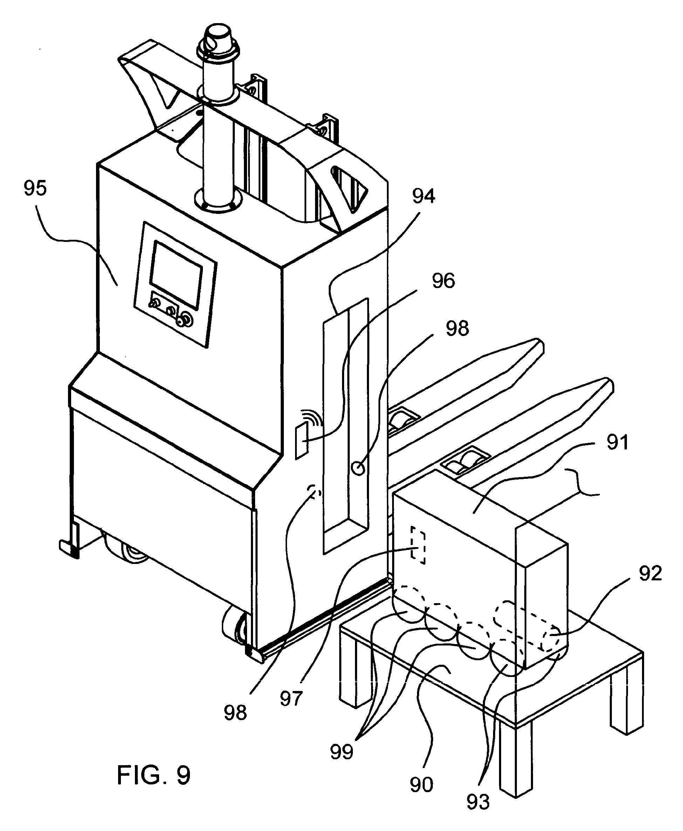

Un autre exemple de mode de réalisation de l'invention est illustré sur la figure 9.

Sur cette figure, une batterie d'accumulateurs de remplacement selon l'invention 91 est posée sur un dispositif de chargement 90.

Dans ce mode de réalisation particulier de l'invention, la batterie 91 est équipée d'un moteur 92 permettant d'assurer sa locomotion. Elle est portée par deux roulettes motrices 93 et six roulettes libres 99, ce qui lui confère une stabilité convenable lors de ses déplacements.

Le montage de la batterie 91 dans le logement 94 du véhicule 95 est initié par une unité de substitution de batterie intégrée au véhicule 95, et comprenant un émetteur infrarouge 96.

Cet émetteur 96 est destiné à transmettre à un récepteur infrarouge solidaire de la batterie 91 un signal généré par l'unité de substitution encapsulant une information de commande.

Le signal reçu par le récepteur 97 est interprété par un module de contrôle qui extrait l'information de commande et exécute la mise en marche du moteur 92.

Afin de détecter la position de la batterie dans le logement, des cellules infrarouges 98 sont prévues sur la surface du logement.

Il est clair que l'émetteur 96 et les cellules 98 permettent également de commander l'extraction la batterie 91 et de la guider lors de sa sortie du logement 94.

### 6.4. Autres caractéristiques optionnelles et avantages de l'invention

Dans des variantes des modes de réalisation de l'invention détaillés ci-dessus, il peut également être prévu :
- d'assurer le verrouillage d'une unité d'alimentation en courant électrique montée dans son logement sur le véhicule en agissant sur le vérin et/ou sur le motoréducteur du dispositif de substitution;
- de motoriser le dispositif de chargement, par exemple pour entraîner en rotation des rouleaux d'une table à rouleaux ;
- un dispositif de chargement pour une pluralité de véhicules selon l'invention présentant, par exemple, un logement de charge de plus que le nombre de véhicule venant déposer leur unité d'alimentation en courant électrique sur le dispositif de chargement.

Dans une autre variante, il peut être envisagé, sans sortir du cadre de l'invention, qu'un chargeur distinct est adjoint à chacun des logements de charge d'un dispositif de charge selon l'invention, et/ou de prévoir un système de coupure automatique des circuits reliant des logements à un même chargeur, lorsque au moins deux unités d'alimentation sont montées dans deux de ces logements.

## Revendications

1. Véhicule automobile (10), notamment du type autoguidé, comprenant au moins un dispositif électrique, tel qu'un moteur électrique (15), une unité d'alimentation (12,73,91) dudit dispositif en courant électrique comprenant au moins un accumulateur électrique ou électrochimique, montée dans un logement (13,710) dudit véhicule présentant des moyens de connexion électrique de ladite unité d'alimentation avec ledit dispositif électrique et des moyens de substitution de ladite unité d'alimentation (12,73,91) par une unité d'alimentation de remplacement (28,41) sensiblement identique à ladite unité d'alimentation (12,73,91) au sein dudit logement (13,710), configurés de sorte à permettre l'extraction de ladite unité (12,73,91) hors dudit logement (13,710) et le montage de ladite unité de remplacement (28,41) dans ledit logement (13,710), comprenant des moyens d'entraînement en coulissement d'un élément de solidarisation (51,72) à ladite unité d'alimentation, porté par une portion d'une bande (53,74), entre une position escamotée dans laquelle ladite unité d'alimentation est montée dans ledit logement et au moins une position de dégagement, dans laquelle ladite unité d'alimentation est au moins partiellement extraite dudit logement, **caractérisé en ce que** lesdits moyens d'entraînement en coulissement comprennent deux poulies mobiles (54;55,75;76) entre lesquelles ladite bande (53,74) est montée tendue, montées sur un support mobile (56,77) par rapport audit logement (710).

2. Véhicule automobile selon la revendication 1, **caractérisé en ce qu'**il comprend des moyens de verrouillage (14) de ladite unité d'alimentation dans ladite position escamotée.

3. Véhicule automobile selon la revendication 1, **caractérisé en ce que** ledit support mobile (56,77) est solidaire de la tige d'un vérin (58,78) destiné à pousser et/ou tirer ledit support.

4. Véhicule automobile selon l'une quelconque des revendications 1 et 3, **caractérisé en ce que** lesdits moyens d'entraînement en coulissement comprennent des moyens appartenant au groupe comprenant au moins :
- moyens d'entraînement motorisé d'une desdites poulies en rotation ;
- moyens de fixation des extrémités de ladite bande audit logement, de façon à permettre un mouflage de ladite bande.

5. Véhicule automobile selon l'une quelconque des revendications 1 à 4, **caractérisé en ce qu'**il comprend des moyens de commande desdits moyens de substitution agencés pour activer lesdits moyens de substitution lorsque la charge dudit accumulateur atteint un seuil minimum prédéterminé.

6. Véhicule automobile selon l'une quelconque des revendications 1 à 5, **caractérisé en ce qu'**il comprend une unité d'alimentation auxiliaire (41) alimentant lesdits moyens de substitution et/ou ledit dispositif électrique et/ou lesdits moyens de commande.

7. Véhicule automobile selon l'une quelconque des revendications 1 à 6, **caractérisé en ce qu'**il comprend des moyens de connexion électrique (83) reliés auxdits moyens de substitution et/ou auxdits moyens de commande, et/ou audit dispositif électrique configurés de sorte à permettre un contact électrique avec un rail fixe (82).

8. Véhicule automobile selon la revendication 1, **caractérisé en ce que** lesdits moyens de substitution comprennent des moyens d'émission (96) d'un signal encapsulant une information de commande d'un moteur (92) destiné à la locomotion de ladite unité d'alimentation ou de ladite unité d'alimentation de remplacement.

9. Véhicule automobile selon l'une quelconque des revendications 1 à 4, **caractérisé en ce que** ladite unité d'alimentation comprend des moyens de guidage (52,44) d'un élément de solidarisation (51,72) des moyens de substitution dudit véhicule à ladite unité.

10. Véhicule automobile selon la revendication 9, **caractérisé en ce que** ladite unité d'alimentation présente une saillie (281) formant poussoir sur une face portant au moins une borne de connexion électrique dudit accumulateur.

11. Véhicule automobile selon la revendication 10, **caractérisé en ce que** ladite unité d'alimentation présente des moyens de locomotion comprenant un moteur (92).

12. Procédé de substitution d'une unité d'alimentation (12,73,91) par une unité d'alimentation de remplacement (28,41) au sein d'un logement (13,710) d'un véhicule automobile (10) selon l'une quelconque des revendications 1 à 11, **caractérisé en ce qu'**il comprend les étapes suivantes :
- extraction (61) de ladite unité d'alimentation dudit logement (13,710) ;
- dépose (62) de ladite unité d'alimentation ;
- déplacement (63) dudit véhicule de sorte à positionner ledit logement (13,710) dudit véhicule en regard de ladite unité d'alimentation de remplacement (28,41) ;
- montage (64) de ladite unité d'alimentation de remplacement dans ledit logement (13,710).

## Patentansprüche

1. Kraftfahrzeug (10), insbesondere fahrerloses Kraftfahrzeug, umfassend wenigstens eine elektrische Vorrichtung, wie einen elektrischen Motor (15), eine Versorgungseinheit (12, 73, 91) zum Versorgen der Vorrichtung mit elektrischem Strom, die mindestens einen elektrischen oder elektrochemischen Akkumulator umfasst, die in einem Gehäuse (13, 710) des Kraftfahrzeugs angeordnet ist, das Mittel zum elektrischen Verbinden der Versorgungseinheit mit der elektrischen Vorrichtung und Mittel zum Ersatz der Versorgungseinheit (12, 73, 91) durch eine Austauschversorgungseinheit (28, 41) in dem Gehäuse (13, 710) aufweist, die im Wesentlichen identisch mit der Versorgungseinheit (12, 73, 91) ist, wobei die Mittel zum Ersatz so konfiguriert sind, dass sie das Herausnehmen der Versorgungseinheit (12, 73, 91) aus dem Gehäuse (13, 710) und die Montage der Austauschversorgungseinheit (28, 41) in dem Gehäuse (13, 710) ermöglichen, umfassend Antriebsmittel, um ein Element zum Koppeln (51, 72) an der Versorgungseinheit, das von einem Teil eines Bandes (53, 74) getragen wird, in eine Gleitbewegung zwischen einer eingefahrenen Stellung, in der die Versorgungseinheit in dem Gehäuse angeordnet ist und wenigstens einer gelösten Stellung, in der die Versorgungseinheit zumindest teilweise aus dem Gehäuse ausgetreten ist, zu bringen, **dadurch gekennzeichnet, dass** die Antriebsmittel für die Gleitbewegung zwei bewegliche Rollen (54; 55, 75; 76) umfassen, zwischen denen das Band (53, 74) gespannt montiert ist und die auf einem relativ zu dem Gehäuse (710) beweglichen Träger (56, 77) angeordnet sind.

2. Kraftfahrzeug gemäß Anspruch 1, **dadurch gekennzeichnet, dass** es Mittel zum Verriegeln (14) der Versorgungseinheit in der eingefahrenen Stellung umfasst.

3. Kraftfahrzeug gemäß Anspruch 1, **dadurch gekennzeichnet, dass** der bewegliche Träger (56, 77) mit der Schubstange eines Zylinders (58, 78) zum Drücken und/oder Ziehen des Trägers verbunden ist.

4. Kraftfahrzeug gemäß einem der Ansprüche 1 bis 3, **dadurch gekennzeichnet, dass** die Antriebsmittel für die Gleitbewegung Mittel umfassen, die zu der Gruppe gehören, welche mindestens umfasst:
- motorisierte Antriebsmittel, um eine der Rollen in Drehbewegung zu versetzen ;
- Mittel zum Befestigen der Enden des Bandes an dem Gehäuse, wobei ein Seiltrieb des Bandes ermöglicht wird.

5. Kraftfahrzeug gemäß einem der Ansprüche 1 bis 4, **dadurch gekennzeichnet, dass** es Mittel zum Steuern der Mittel zum Ersatz umfasst, die ausgebildet sind, um die Mittel zum Ersatz zu aktivieren, wenn die Ladung des Akkumulators einen vorgegebenen Mindestwert erreicht.

6. Kraftfahrzeug gemäß einem der Ansprüche 1 bis 5, **dadurch gekennzeichnet, dass** es eine Hilfsversorgungseinheit (41) umfasst, die die Mittel zum Ersatz und/oder die elektrische Vorrichtung und/oder die Steuermittel versorgt.

7. Kraftfahrzeug gemäß einem der Ansprüche 1 bis 6, **dadurch gekennzeichnet, dass** es Mittel zum elektrischen Verbinden (83) umfasst, die mit den Mitteln zum Ersatz und/oder den Steuermitteln und/oder der elektrischen Vorrichtung verbunden sind, die so ausgebildet sind, dass sie einen elektrischen Kontakt mit einer festen Schiene (82) ermöglichen.

8. Kraftfahrzeug gemäß Anspruch 1, **dadurch gekennzeichnet, dass** die Mittel zum Ersatz Mittel zur Ausgabe eines Signals (96) umfassen, das eine Steuerinformation für einen Motor (92) enthält, der zum Bewegen der Versorgungseinheit oder der Austauschversorgungseinheit dient.

9. Kraftfahrzeug gemäß einem der Ansprüche 1 bis 4, **dadurch gekennzeichnet, dass** die Versorgungseinheit Mittel zum Führen (52, 44) eines Elementes zum Koppeln (51, 72) der Mittel zum Ersatz des Kraftfahrzeugs an der Einheit umfasst.

10. Kraftfahrzeug gemäß Anspruch 9, **dadurch gekennzeichnet, dass** die Versorgungseinheit einen Vorsprung (281) umfasst, die einen Schieber an einer Seite ausbildet, die mindestens einen elektrischen Verbindungsanschluss für den Akkumulator trägt.

11. Kraftfahrzeug gemäß Anspruch 10, **dadurch gekennzeichnet, dass** die Versorgungseinheit Antriebsmittel aufweist, die einen Motor (92) umfassen.

12. Verfahren zum Austausch einer Versorgungseinheit (12, 73, 91) durch eine Austauschversorgungseinheit (28, 41) in einem Gehäuse (13, 710) eines Kraftfahrzeuges (10), gemäß einem der Ansprüche 1 bis 11, **dadurch gekennzeichnet, dass** es die folgenden Schritte umfasst :
- Herausnehmen (61) der Versorgungseinheit aus dem Gehäuse (13, 710) ;
- Ablegen (62) der Versorgungseinheit ;
- Verlagern (63) des Kraftfahrzeuges, um das Gehäuse (13, 710) des Kraftfahrzeuges gegenüber der Austauschversorgungseinheit (28, 41) anzuordnen ;
- Einbau (64) der Austauschversorgungseinheit in das Gehäuse (13, 710).

## Claims

1. A motor vehicle (10), in particular of the automatic guided kind, comprising at least one electrical device, such as an electric motor (15), a supply unit (12, 73, 91) of the device with electric current, comprising at least one electric or electrochemical accumulator, mounted in a housing (13, 710) of the vehicle, having means of electrical connection of the supply unit with the electric device, and means for substitution of the supply unit (12, 73, 91) by a replacement supply unit (28, 41) substantially identical to the supply unit (12, 73, 91) within the housing (13, 710), configured so as to permit the extraction of the unit (12, 73, 91) from the housing (13, 710) and the mounting of the replacement unit (28, 41) in the housing (13, 710), comprising means for sliding entrainment of an attachment element (51, 72) to the supply unit, carried by a portion of a band (53, 74), between a retracted position in which the supply unit is mounted in the housing, and at least one release position, in which the supply unit is at least partially extracted from the housing,
wherein the means for sliding entrainment include two mobile pulleys (54; 55, 75; 76), between which the band (53, 74) is mounted in a tensioned manner, which are mounted on a mobile support (56, 77) with respect to the housing (710).

2. The motor vehicle according to Claim 1 comprising locking means (14) of the supply unit in the retracted position.

3. The motor vehicle according to Claim 1, wherein the mobile support (56, 77) is integral with the rod of a jack (58, 78) intended to push and/or pull the support.

4. The motor vehicle according to any one of Claims 1 and 3, wherein the means for sliding entrainment include means belonging to the group comprising at least:
- means for motorised entrainment of one of the pulleys in rotation;
- means for fixing the ends of the band to the housing, so as to permit a reeving of the band.

5. The motor vehicle according to any one of Claims 1 to 4, comprising control means of the substitution means, arranged to activate the substitution means when the load of the accumulator reaches a minimum predetermined threshold.

6. The motor vehicle according to any one of Claims 1 to 5, comprising an auxiliary supply unit (41) supplying the substitution means and/or the electric device and/or the control means.

7. The motor vehicle according to any one of Claims 1 to 6, comprising means for electrical connection (83) connected to the substitution means and/or to the control means, and/or to the electric device, configured so as to permit an electric contact with a fixed rail (82).

8. The motor vehicle according to Claim 1, wherein the substitution means comprise transmission means (96) of a signal encapsulating control data of a motor (92) intended for the transport of the supply unit or of the replacement supply unit.

9. The motor vehicle according to any one of Claims 1 to 4, wherein the supply unit comprises guiding means (52, 44) of an attachment element (51, 72) of the substitution means of said vehicle to the unit.

10. The motor vehicle according to Claim 9, wherein the supply unit has a projection (281) forming a pusher on a face carrying at least one electrical connection terminal of the accumulator.

11. The motor vehicle according to Claim 10, wherein the supply unit has transport means comprising a motor (92).

12. A method for substitution of a supply unit (12, 73, 91) by a replacement supply unit (28, 41) within a housing (13, 710) of a motor vehicle (10) according to any one of Claims 1 to 11, comprising the following steps:
- extraction (61) of the supply unit from the housing (13, 710);
- removal (62) of the supply unit;
- displacement (63) of the vehicle so as to position the housing (13, 710) of the vehicle with respect to the replacement supply unit (28, 41);
- mounting (64) of the replacement supply unit in the housing (13, 710).
